(19) **Europäisches Patentamt / European Patent Office / Office européen des brevets**

(11) **EP 3 240 668 B1**

(12) **FASCICULE DE BREVET EUROPEEN**

(45) Date de publication et mention
de la délivrance du brevet:
**02.01.2019 Bulletin 2019/01**

(21) Numéro de dépôt: **15810688.0**

(22) Date de dépôt: **23.11.2015**

(51) Int Cl.:
*B29C 49/78* *(2006.01)*  *B29C 49/48* *(2006.01)*
*B29C 49/06* *(2006.01)*  *B29C 49/12* *(2006.01)*
*B29C 49/36* *(2006.01)*  *B29L 31/00* *(2006.01)*

(86) Numéro de dépôt international:
**PCT/FR2015/053166**

(87) Numéro de publication internationale:
**WO 2016/083711 (02.06.2016 Gazette 2016/22)**

(54) **PROCÉDÉ DE FABRICATION DE RÉCIPIENT À BOXAGE CALÉ SUR LE SOUFFLAGE**

VERFAHREN ZUR HERSTELLUNG EINES BEHÄLTERS MIT BLASZEITGESTEUERTEM EINPACKEN

METHOD FOR MANUFACTURING A CONTAINER INCLUDING BOXING TIMED WITH BLOWING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2014 FR 1461575**

(43) Date de publication de la demande:
**08.11.2017 Bulletin 2017/45**

(73) Titulaire: **Sidel Participations**
**76930 Octeville-sur-Mer (FR)**

(72) Inventeurs:
• **PROTAIS, Pierrick**
**76930 Octeville-sur-Mer (FR)**
• **SANTAIS, Franck**
**76930 Octeville-sur-Mer (FR)**
• **DERRIEN, Mikaël**
**76930 Octeville-sur-Mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
**EP-A1- 2 709 821       US-A- 5 122 327**
**US-A1- 2009 139 996     US-A1- 2010 204 819**
**US-A1- 2011 298 162     US-A1- 2014 203 481**

## Description

L'invention a trait à la fabrication des récipients par formage d'ébauches en matière plastique tel que le polytéréphtalate d'éthylène (PET).

Une technique classique de fabrication de récipients est le soufflage (éventuellement doublé d'un étirage). Cette technique consiste à introduire l'ébauche (c'est-à-dire une préforme ou un récipient intermédiaire ayant subi une opération de préformage), préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par une ouverture dont elle est pourvue au niveau de son col, un fluide, tel qu'un gaz sous pression (généralement de l'air) pour plaquer la matière contre la paroi du moule. Plus précisément, le formage comprend généralement deux phases consécutives : une phase de présoufflage lors de laquelle on injecte dans l'ébauche un fluide à une pression de présoufflage, et une phase de soufflage lors de laquelle on injecte dans l'ébauche un fluide à une pression de soufflage supérieure à la pression de présoufflage. Dans les procédés classiques, où de l'air est employé pour réaliser le formage, la pression de présoufflage est comprise entre 5 et 10 bars, et la pression de soufflage entre 20 et 40 bars.

Pour certaines applications, il est nécessaire de former sur le récipient des réserves en creux, notamment dans un but esthétique (par ex. création de galbes), fonctionnel (réalisation d'une poignée de préhension du récipient) ou structurel (par ex. réalisation de panneaux latéraux ou d'un fond ayant subi un étirage supplémentaire, destinés à absorber la déformation du récipient lors d'un remplissage à chaud).

Lorsqu'une telle réserve atteint une certaine profondeur, le récipient ne peut être formé dans un moule ordinaire car, malgré la pression de soufflage élevée, celle-ci est insuffisante pour parfaitement appliquer la matière contre le relief du moule destiné à former la réserve, surtout dans les zones tournées à l'opposé du col du récipient à partir duquel se développe la bulle de soufflage.

Aussi, on a habituellement recours à des moules munis d'inserts mobiles initialement escamotés dans la paroi du moule et déployés en cours de formage pour venir repousser la paroi du récipient, comme cela est illustré dans la demande de brevet européen EP 1 922 256 ou la demande de brevet américain correspondante US 2009/139996 (Sidel).

Cette technique, couramment appelée « boxage », est notamment utilisée pour le formage de récipients munis d'une poignée intégrée, ou d'un fond ayant subi un étirage supplémentaire et destiné à absorber la déformation du récipient lors d'un remplissage à chaud, cf. la demande de brevet européen EP 2 173 637 (Sidel).

La technique du boxage est complexe car, suivant la forme et la profondeur des réserves à réaliser, le repoussage opéré par l'insert peut conduire à un amincissement de la matière, voire à une rupture locale de la paroi du récipient qui rend celui-ci inexploitable. C'est pourquoi le réglage des machines dédiées au boxage est délicat ; il est généralement confié à des opérateurs expérimentés dont le tour de main permet de réaliser au jugé des récipients conformes. Mais il est usuel que les paramètres de réglage (notamment la pression, le débit de soufflage et la vitesse de déplacement de l'insert), initialement corrects, subissent au cours de la fabrication des dérives incontrôlées qui affectent la qualité des récipients. Les opérateurs expérimentés n'étant pas toujours disponibles pour corriger les réglages, il est parfois nécessaire de stopper la ligne de production pour éviter l'accumulation de récipients non conformes.

En outre, il a été déterminé que la qualité des récipients - en particulier en matière de performances mécaniques - découle d'un réglage précis de la phase de boxage par rapport aux phases de présoufflage et de soufflage. Il a en particulier été déterminé qu'il est avantageux d'initier le boxage avant le soufflage, cf. la demande de brevet européen EP 2 709 821 (Sidel).

Cependant des tests ont démontré que ce seul critère peut être insuffisant pour garantir une bonne qualité de récipient.

L'invention vise par conséquent à perfectionner encore les techniques de fabrication avec boxage, pour améliorer la qualité des récipients produits.

A cet effet, il est proposé un procédé de fabrication d'un récipient à partir d'une ébauche en matière plastique, au sein d'un moule muni d'une paroi définissant une cavité à l'empreinte du récipient, et d'un insert mobile par rapport à la paroi entre une position rétractée et une position déployée, ce procédé comprenant, après une opération d'introduction de l'ébauche dans le moule :

- une phase de présoufflage comprenant l'injection dans l'ébauche d'un fluide à une pression de présoufflage ;
- une phase de soufflage, consécutive à la phase de présoufflage et comprenant l'injection dans l'ébauche d'un fluide à une pression de soufflage supérieure à la pression de présoufflage ;
- une phase de boxage comprenant le déplacement de l'insert de sa position rétractée vers sa position déployée ;

ce procédé comprenant en outre les opérations consistant à :

- mesurer en temps réel la pression régnant dans l'ébauche ;
- mémoriser les valeurs de la pression mesurée et leurs instants respectifs de mesure ;
- mesurer en temps réel la position de l'insert ;
- mémoriser les valeurs de la position mesurée de l'insert et leurs instants respectifs de mesure ;

- à partir des valeurs mémorisées de la pression dans l'ébauche, détecter et mémoriser un instant $t_{S2}$ marquant le début réel de la phase de soufflage ;
- à partir des valeurs de position mesurée de l'insert, détecter et mémoriser un instant $t_{B2}$ marquant le début réel du déplacement de l'insert ;
- calculer l'intervalle, noté T1, séparant $t_{B2}$ de $t_{S2}$ ;
- comparer l'intervalle T1 avec une valeur $T1_{ref}$ de référence prédéterminée non nulle,
- tant que l'intervalle T1 est décrété différent de la valeur $T1_{ref}$ de référence, décaler l'initiation de la phase de boxage.

Ce procédé part de l'hypothèse, formulée à la suite de tests conduits sur de nombreux récipients, que, pour obtenir des récipients produits de qualité élevée et surtout constante (notamment, lorsque l'insert est un fond de moule, en termes de performances mécaniques du fond du récipient), il est nécessaire de maintenir constante l'avance (exprimée ci-dessus en termes d'intervalle noté T1) du boxage sur le soufflage (en supposant conforme le soufflage lui-même). La correction automatique est effectuée, lorsqu'une dérive est constatée dans l'avance T1, d'un cycle à l'autre dans un premier cas, ou périodiquement après que des données ont été collectées sur plusieurs cycles dans un deuxième cas. Cette correction (qui correspond par exemple, dans le deuxième cas, à une moyenne calculée sur plusieurs cycles) permet de fabriquer des récipients conformes à un standard de qualité élevé sans toutefois recourir à un réglage manuel de la machine.

Le décalage évoqué peut consister, tant que l'intervalle T1 est décrété inférieur à la valeur $T1_{ref}$ de référence, à avancer la phase de boxage.

Dans le cas où l'insert est solidaire de la tige d'un vérin alimenté en fluide sous pression par l'intermédiaire d'un distributeur à ouverture commandée, le décalage de l'initiation de la phase de boxage consiste à décaler la commande d'ouverture du distributeur.

Les opérations supplémentaires suivantes peuvent être prévues :

- à partir des valeurs de position mesurée de l'insert, détecter un instant $t_{B3}$ auquel l'insert atteint sa position haute ;
- calculer l'intervalle, noté T2, séparant $t_{B3}$ de $t_{B2}$ ;
- comparer l'intervalle T2 avec une valeur $T2_{ref}$ de référence prédéterminée non nulle ;
- tant que l'intervalle T2 est décrété différent de la valeur $T2_{ref}$ de référence, modifier la vitesse de déplacement de l'insert lors de la phase de boxage.

Dans le cas où l'insert est solidaire de la tige d'un vérin alimenté en fluide sous pression, sont en outre prévues les opérations consistant à :

- mesurer la position de l'insert à instant $t_{S2}$ marquant le début réel de la phase de soufflage,

- vérifier si la position de l'insert est comprise entre deux valeurs prédéterminées et si T2 est également compris entre deux valeurs prédéterminées,
- si ces deux conditions ne sont pas conjointement satisfaites, générer une alerte.

De plus, dans le cas où le vérin est relié à une évacuation par l'intermédiaire d'un variateur de débit, il peut être prévu, si la position de l'insert n'est pas comprise entre deux valeurs prédéterminées ou si T2 n'est pas compris entre deux valeurs prédéterminées, une opération consistant à modifier le débit de fluide au niveau du variateur de débit.

En variante, on peut prévoir les opérations suivantes :

- à partir des valeurs mémorisées de la pression dans l'ébauche, détecter et mémoriser un instant $t_{S3}$ auquel la pression dans l'ébauche cesse de croître pendant la phase de soufflage ;
- à partir des valeurs de position mesurée de l'insert, détecter un instant $t_{B3}$ auquel l'insert atteint sa position haute ;
- calculer l'intervalle, noté T3, séparant $t_{S3}$ de $t_{B3}$ ;
- comparer l'intervalle T3 avec une valeur $T3_{ref}$ de référence prédéterminée non nulle ;
- tant que l'intervalle T3 est décrété différent de la valeur $T3_{ref}$ de référence, modifier la vitesse de déplacement de l'insert lors de la phase de boxage.

Dans le cas où l'insert est solidaire de la tige d'un vérin alimenté en fluide sous pression par l'intermédiaire d'un distributeur à ouverture commandée et d'un variateur de pression, la modification de la vitesse de déplacement de l'insert peut consister à agir sur le variateur de pression pour modifier la pression de fluide alimentant le vérin.

Dans le cas où l'insert est solidaire de la tige d'un vérin alimenté en fluide sous pression par l'intermédiaire d'un distributeur à ouverture commandée, les opérations supplémentaires suivantes peuvent être prévues :

- mesurer un temps de réponse du vérin et/ou un temps de réponse du distributeur et,
- comparer ce temps de réponse à une valeur seuil prédéterminée,
- lorsque ce temps de réponse est supérieur à la valeur de référence, générer une alerte.

En outre, dans le cas où l'insert est solidaire de la tige d'un vérin alimenté en fluide sous pression par l'intermédiaire d'un distributeur à ouverture commandée et d'un variateur de pression, le vérin étant en outre relié à une évacuation par l'intermédiaire d'un variateur de débit, peuvent en outre être prévues les opérations consistant, si le débit au niveau du variateur atteint un minimum, respectivement un maximum, à commander le variateur de pression pour diminuer, respectivement augmenter, la pression injectée dans le vérin.

D'autres objets et avantages de l'invention apparaîtront à la lumière de la description d'un mode de réalisation, faite ci-après en référence aux dessins annexés dans lesquels :

- la figure 1 est une vue en coupe schématique montrant une unité de formage équipée d'un moule dans lequel a lieu le formage d'un récipient, montré à l'instant du début de la phase de présoufflage ;
- la figure 2 est une vue similaire à la figure 1, illustrant la fin de la phase de présoufflage ;
- la figure 3 est une vue similaire à la figure 1, illustrant la fin de la phase de boxage ;
- la figure 4 est un diagramme sur lequel sont tracés parallèlement, de haut en bas et de manière synchronisée temporellement :

  - la courbe de boxage donnant l'évolution de la position de l'insert au cours du temps,
  - la courbe de pression relatant l'évolution de la pression régnant dans le récipient au cours du temps,
  - les chronogrammes de commande des phases de présoufflage, soufflage et boxage.

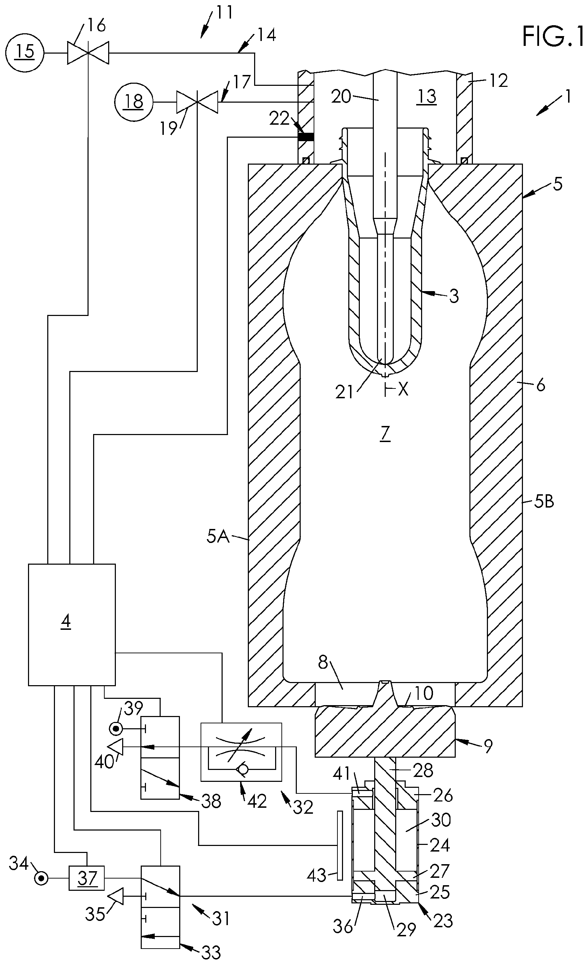

Sur la figure 1 est représentée une unité **1** de formage d'un récipient **2** par étirage soufflage à partir d'une ébauche **3** en matière plastique, notamment en PET (polytéréphtalate d'éthylène). L'ébauche **3** peut être une préforme brute d'injection (comme dans l'exemple illustré) ou un récipient intermédiaire obtenu par une ou plusieurs opérations de formage préalable réalisées sur une préforme brute.

En pratique, l'unité 1 de formage est montée, avec d'autres unités **1** de formage semblables, sur un carrousel tournant d'une machine de formage.

L'unité **1** de formage est pilotée de manière automatique par une unité **4** de contrôle comprenant au moins un contrôleur (par exemple du type API - acronyme d'Automate programmable industriel) équipé d'actionneurs.

L'unité **1** de formage comprend, en premier lieu, un moule **5** muni d'une paroi **6** définissant une cavité **7** à l'empreinte du récipient **2** à former, qui s'étend selon un axe **X** principal et présente une ouverture **8,** et d'un insert **9** monté mobile dans l'ouverture **8** par rapport à la paroi **6.** L'insert **9** est muni d'une surface **10** interne à l'empreinte d'une réserve à former en creux sur le récipient **2.** Selon un mode de réalisation illustré sur les dessins, cette réserve est un fond du récipient, dont l'étirage supplémentaire procuré par la mobilité de l'insert **9** lors du formage conduit à une meilleure rigidité structurelle grâce à une augmentation de la cristallinité de la matière. Dans ce qui suit, on suppose que l'insert **9** est un fond de moule. Dans ce cas, l'ouverture **8** est réalisée axialement dans la partie basse de la paroi **6.**

Dans une variante, non représentée, la réserve en creux est par exemple destinée à former une poignée ou accueillir une poignée rapportée. Dans ce cas, l'insert serait disposé sur un côté de la paroi **6,** et l'ouverture serait réalisée radialement sur ce côté. Le mode de fonctionnement d'un tel insert serait le même que celui exposé ci-après où l'insert **9** est un fond de moule.

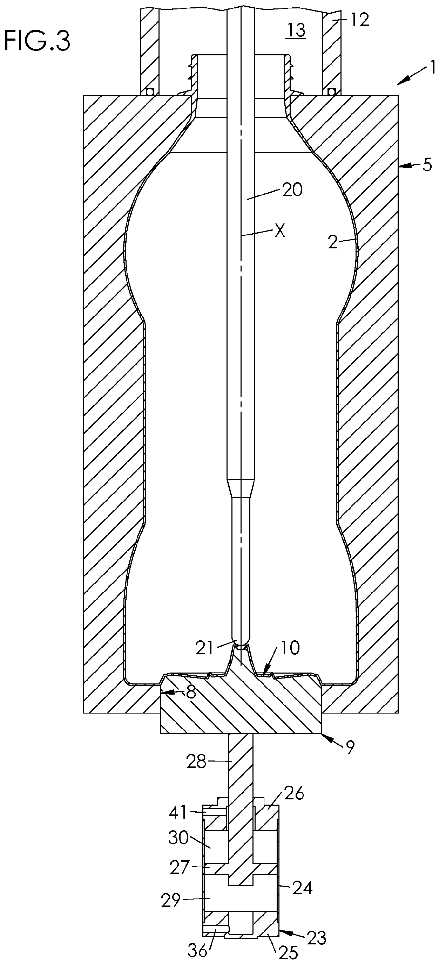

Le fond **9** de moule est monté mobile par rapport à la paroi **6** entre une position rétractée (ou basse), illustrée sur la figure 1, dans laquelle le fond **9** de moule s'étend en retrait par rapport à la cavité **7** en étant écarté de l'ouverture **8,** et une position déployée ou haute, illustrée sur la figure 3, dans laquelle le fond **9** de moule obture l'ouverture **8,** et dans laquelle la surface **10** interne ferme la cavité **7** en complétant ainsi l'empreinte du récipient **2.** On appelle « course » du fond de moule la distance, notée C, séparant sa position basse de sa position haute.

Le moule **5** est par exemple du type portefeuille et comprend deux demi-moules **5A, 5B** articulés autour d'une charnière commune et qui s'ouvrent pour permettre, successivement, l'évacuation d'un récipient **2** formé et l'introduction d'une ébauche **3,** préalablement chauffée dans une machine de conditionnement thermique placée en amont de la machine de formage.

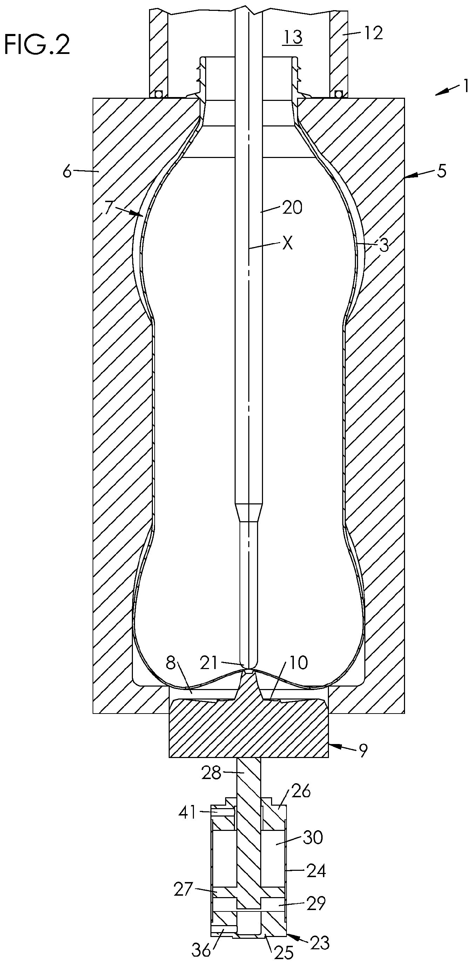

Chaque unité 1 de formage comprend, en deuxième lieu, un dispositif **11** d'injection comprenant une tuyère **12** définissant une chambre **13** d'injection. La tuyère **12** est montée à l'aplomb du moule **5** en étant mobile axialement par rapport à celui-ci entre une position désaccouplée dans laquelle la tuyère **12** est écartée du moule pour permettre à la fois l'introduction d'une ébauche **3** dans celui-ci et l'évacuation de celui-ci d'un récipient **2** formé, et une position accouplée (illustrée sur les figures 1 à 3) dans laquelle la tuyère **12** est appliquée de manière étanche contre le moule **5** autour de l'ébauche **3** pour assurer la mise en communication fluidique de la chambre **13** d'injection avec l'intérieur de l'ébauche **3.**

Le dispositif **11** d'injection comprend par ailleurs un circuit **14** fluidique de présoufflage, qui relie fluidiquement la chambre **13** d'injection à une source **15** de fluide à une pression dite de présoufflage, par l'intermédiaire d'une électrovanne **16** de présoufflage pilotée par l'unité **4** de contrôle. En pratique, le fluide est un gaz, tel que de l'air. La pression de présoufflage est par exemple comprise entre 5 et 10 bars.

Le dispositif **11** d'injection comprend en outre un circuit **17** fluidique de soufflage, qui relie fluidiquement la chambre **13** d'injection à une source **18** de fluide à une pression dite de soufflage, supérieure à la pression de présoufflage, par l'intermédiaire d'une électrovanne **19** de soufflage pilotée par l'unité **4** de contrôle. En pratique, le fluide est de l'air. La pression de soufflage est par exemple comprise entre 20 et 40 bars. Le dispositif **11** d'injection comprend, enfin, un circuit de dégazage (non représenté) qui relie fluidiquement la chambre **13** d'injection à l'air libre, par l'intermédiaire d'une électrovanne de mise à l'air également pilotée par l'unité **4** de contrôle.

Chaque unité **1** de formage comprend, en troisième lieu, une unité d'étirage équipée d'une tige **20** d'étirage qui s'étend suivant l'axe **X** du moule **5** et jusqu'à une extrémité **21** distale arrondie et est montée mobile axialement par rapport au moule **5**. La tige **20** s'étend axialement au travers de la tuyère **12,** de manière étanche.

L'unité **1** de formage comprend également un capteur **22** de pression monté sur la tuyère **12** pour mesurer la pression régnant dans la chambre **13** d'injection, qui est identique à celle régnant dans la l'ébauche **3** puis dans le récipient **2**. Le capteur **22** est relié à l'unité **4** de contrôle qui en mémorise les valeurs à chaque instant (suivant une période prédéterminée, par exemple de l'ordre de quelques millisecondes).

L'unité **1** de formage comprend, en quatrième lieu, un actionneur **23** pour le contrôle de la position du fond **9** de moule. Selon un mode de réalisation illustré sur la figure 1, cet actionneur **23** se présente sous la forme d'un vérin muni d'une chemise **24** cylindrique, d'une paroi **25** inférieure et d'une paroi **26** supérieure fermant la chemise **24** à chacune de ses extrémités, et d'un piston **27** monté coulissant dans la chemise **24** entre les parois **25, 26**. Le piston **27** est solidaire d'une tige **28** traversant la paroi **26** supérieure. Le fond **9** de moule est monté sur la tige **28** à une extrémité supérieure de celle-ci faisant saillie hors de la paroi **26** supérieure. La fixation du fond **9** de moule sur la tige **28** peut être réalisée de manière classique, typiquement par vissage.

Le piston **27** et la tige **28** sont solidairement mobiles par rapport à la chemise **24** entre une position rétractée, correspondant à la position rétractée du fond **9** de moule (figure 1), et une position déployée, correspondant à la position déployée du fond **9** de moule.

Dans l'exemple illustré, le vérin **23** est du type double effet. Le piston **27** délimite d'une part, avec la paroi **25** inférieure, une chambre **29** primaire et, d'autre part, avec la paroi **26** supérieure, une chambre **30** secondaire. Pour commander le vérin **23,** l'unité **1** de formage comprend un circuit **31** fluidique primaire et un circuit **32** fluidique secondaire.

Le circuit **31** fluidique primaire comprend un distributeur **33** primaire du type 3/2 (trois orifices, deux positions ; ce type de distributeur peut s'apparenter à une électrovanne à trois voies) piloté par l'unité **4** de contrôle. Le distributeur **33** primaire présente une première entrée par laquelle il est relié à une source **34** primaire de fluide sous pression (qui peut être confondue avec la source **18** de fluide à la pression de soufflage) et une deuxième entrée par laquelle il est relié à une évacuation **35**. Le distributeur **33** primaire présente par ailleurs une sortie par laquelle il est relié à la chambre **29** primaire, via un orifice **36** primaire pratiqué dans la paroi **25** inférieure. Selon un mode de réalisation préféré illustré sur la figure **1,** un variateur **37** de pression est interposé entre la source **34** primaire et la première entrée du distributeur **33** primaire, et relié à l'unité **4** de contrôle qui en assure la commande. Le variateur **37** a pour fonction de faire varier la pression dans la chambre **29** primaire, suivant une consigne imposée par l'unité **4** de contrôle, notamment en fonction de la capacité du récipient **2** à former, et plus précisément en fonction du diamètre du fond **9** de moule.

Le circuit **32** secondaire comprend un distributeur **38** secondaire du type 3/2 piloté par l'unité **4** de contrôle. Le distributeur **38** secondaire présente une première entrée par laquelle il est relié à une source **39** secondaire de fluide sous pression (qui peut être confondue avec la source **18** de fluide à la pression de soufflage et avec la source **34** primaire) et une deuxième entrée par laquelle il est relié à une évacuation **40**. Le distributeur **38** secondaire présente par ailleurs une sortie par laquelle il est relié à la chambre **30** secondaire, via un orifice **41** secondaire pratiqué dans la paroi **26** supérieure. Selon un mode de réalisation illustré sur la figure 1, le circuit **32** fluidique secondaire comprend un variateur (ou restricteur) **42** de débit interposé entre le distributeur **38** secondaire et l'orifice **41** secondaire. Le variateur **42** de débit a pour fonction de moduler le débit de fluide injecté dans la chambre **30** secondaire, et donc la vitesse de déplacement du piston **27** (et du fond **9** de moule qui lui est solidaire).

Suivant un mode de réalisation alternatif, le vérin **23** est électrique.

L'unité 1 de formage comprend, enfin, un capteur **43** de position du fond **9** de moule, relié à l'unité **4** de contrôle. Le fond **9** de moule étant solidaire du piston **27,** le capteur **43** peut mesurer la position de celui-ci. Il peut s'agir d'un capteur capacitif, d'un capteur magnétique, ou encore d'un capteur optique. La tige **20** d'étirage étant maintenue en contact avec le fond **9** de moule (la matière du fond du récipient **2** étant prise en sandwich entre eux) pendant la phase de boxage, la mesure de la position du fond **9** de moule peut être réalisée par la mesure de la position de la tige **20,** comme décrit dans la demande de brevet français FR 2 998 207 ou son équivalent international WO 2014/080109.

La fabrication d'un récipient **2** à partir d'une ébauche **3** (notamment une préforme) pendant un cycle de formage comprend d'abord une phase préliminaire d'introduction de l'ébauche **3** dans le moule **5,** conduite en position d'abord ouverte puis fermée de celui-ci, et en position basse du fond **9** de moule. Avant son introduction dans le moule **5,** l'ébauche **3** a d'abord subi une chauffe à une température supérieure à la température de transition vitreuse de la matière (environ 80°C dans le cas du PET) pour présenter une certaine malléabilité.

Il est prévu ensuite une phase de présoufflage de l'ébauche **3,** qui comprend :

- la descente de la tige **20,**
- dès que la tige **20** atteint le fond de l'ébauche **3,** l'injection dans celle-ci de fluide à la pression de présoufflage ; à cet effet, l'unité **4** de contrôle commande l'ouverture de l'électrovanne **16** de présoufflage pour mettre en communication fluidique la source **15** de fluide à la pression de présoufflage avec la chambre **13** d'injection (et donc avec l'ébauche **3**).

On suppose que la phase de présoufflage est conforme, c'est-à-dire qu'elle ne présente pas de décalage notoire (temporel ou en pression) par rapport à un modèle de soufflage prédéterminé.

La vitesse de descente de la tige **20** est telle qu'elle demeure en contact avec le fond de la préforme constituant l'ébauche **3** jusqu'à atteindre le fond **9** de moule.

Le présoufflage provoque le gonflement de l'ébauche **3** jusqu'à venir en contact seulement partiel avec la paroi **6** et le fond **9** de moule, la pression de présoufflage n'étant pas suffisante pour plaquer complètement l'ébauche **3** contre la paroi **6**. En d'autres termes, la prise d'empreinte est insuffisante.

C'est pourquoi il est prévu, consécutivement à la phase de présoufflage, une phase de soufflage de l'ébauche, qui comprend l'injection dans l'ébauche **3** du fluide à la pression de soufflage ; à cet effet, l'unité **4** de contrôle commande la fermeture de l'électrovanne **16** de présoufflage et l'ouverture de l'électrovanne **19** de soufflage pour mettre en communication fluidique la source **18** de fluide à la pression de soufflage avec la chambre **13** d'injection (et donc avec l'ébauche **3**). La fermeture de l'électrovanne **16** de présoufflage est commandée par l'unité **4** de contrôle simultanément à (ou avec un léger retard sur) la commande d'ouverture de l'électrovanne **19** de soufflage.

On suppose que la phase de soufflage est conforme, c'est-à-dire qu'elle ne présente pas de décalage notoire (temporel ou en pression) par rapport à un modèle de soufflage prédéterminé.

Comme illustré sur les figures, il est en outre prévu une phase de boxage qui comprend le déplacement du fond **9** de moule de sa position basse vers sa position haute. Dans sa position basse, l'orifice **36** primaire du vérin **23** est en communication fluidique avec l'évacuation **35**, et la chambre **30** secondaire en communication fluidique avec la source **39** secondaire de fluide sous pression. Pour déplacer le fond **9** de moule vers sa position haute, l'unité **4** de contrôle pilote :

-   le distributeur **33** primaire pour placer l'orifice **36** primaire du vérin **23** en communication fluidique avec la source **34** primaire de fluide ;
-   le distributeur **38** secondaire pour placer l'orifice **41** secondaire en communication fluidique avec l'évacuation **40**.

Le piston **27** est alors repoussé vers sa position haute sous la pression du fluide dans la chambre **29** primaire, à l'encontre de l'effort résistant du fluide de la chambre **30** secondaire. Selon un mode de réalisation, l'unité **4** de contrôle commande le variateur **37** de pression et le variateur **42** de débit pour moduler la vitesse de déplacement du piston (et donc du fond **9** de moule) et la poussée exercée sur celui-ci. Les lois de commande du variateur **37** de pression et du variateur **42** de débit peuvent être basées sur le diamètre du fond **9** de moule : il est en effet préférable que la vitesse de déplacement (et donc le débit) soit élevée lorsque le fond **9** de moule est de grand diamètre, et comparativement plus faible lorsque le fond **9** de moule est de petit diamètre.

La phase de boxage est initiée avec une légère avance sur la phase de soufflage, afin notamment d'éviter le pincement de la matière entre le fond **9** de moule et l'ouverture **8** et surtout, comme cela a été constaté, de former au mieux le fond du récipient **2** lorsque cette avance est correctement réglée. Le boxage permet de réaliser un étirage supplémentaire sur le fond du récipient **2**, favorable à l'orientation des molécules (et donc à la rigidité mécanique).

Pendant l'ensemble du cycle de formage, la pression dans le l'ébauche **3** est mesurée en temps réel, et les valeurs de la pression mesurée ainsi que leurs instants respectifs de mesure sont mémorisées par l'unité **4** de contrôle.

De même, pendant le cycle de formage, la position du fond **9** de moule est mesurée en temps réel par le capteur **43,** et les valeurs de la position mesurée du fond **9** de moule ainsi que leurs instants respectifs de mesure sont mémorisées par l'unité **4** de contrôle.

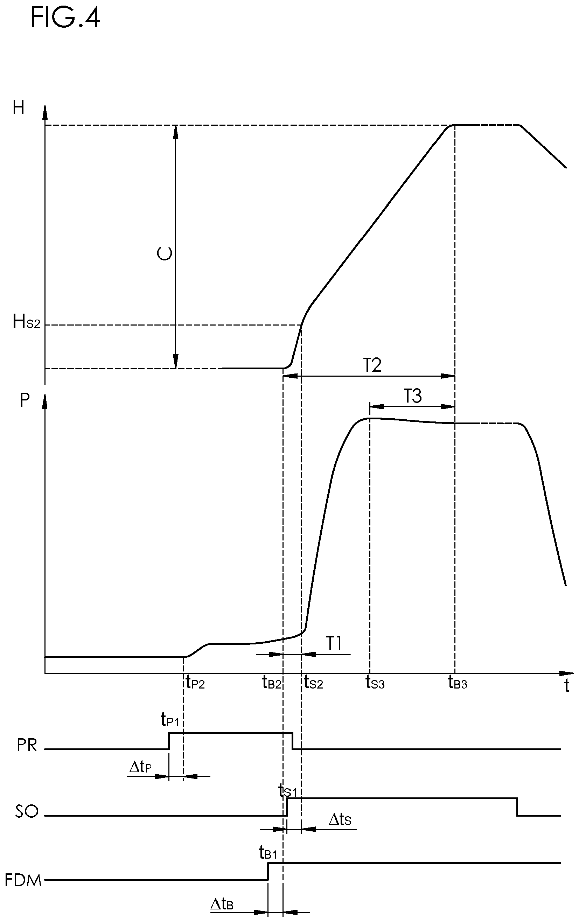

On a représenté sur la figure 4 les courbes représentant, en fonction du temps (noté t) :

-   en haut, la position axiale (ou hauteur, notée H) du fond **9** de moule,
-   au milieu, la pression (notée P) régnant dans l'ébauche **3** ou dans le récipient **2** en cours de formage ;
-   en bas, les chronogrammes de l'électrovanne **16** de présoufflage (noté PR), de l'électrovanne **19** de soufflage (noté SO.) et des distributeurs **33, 38** (noté FDM).

Les courbes sont synchronisées sur l'axe de temps qui leur est commun, les lignes verticales en pointillés permettant d'effectuer une mise en correspondance des courbes à certains instants choisis.

Comme nous l'avons déjà évoqué, les mesures sont effectuées à intervalles réguliers. Ces intervalles peuvent être définis par une cadence d'horloge fournie par l'unité **4** de contrôle, inférieure ou égale à la cadence maximale à laquelle peuvent fonctionner le capteur **22** de pression et le capteur **43** de position du fond de moule. Les courbes apparaissent continues sur la figure 4 car l'unité **4** de contrôle peut, par simple interpolation (notamment polynomiale), les construire ainsi à partir des mesures ponctuelles fournies par les capteurs **22, 43**.

La commande d'ouverture de l'électrovanne **16** de présoufflage est donnée à un instant $t_{P1}$ dénommé « top départ présoufflage ». L'électrovanne **16** de présoufflage étant affectée d'un temps de réponse $\Delta t_P$, la

pression P régnant dans le récipient **2** subit une montée à partir d'un instant $t_{P2}$, dénommé « départ réel présoufflage », tel que $t_{P2} = t_{P1} + \Delta t_P$.

De même, la commande d'ouverture de l'électrovanne **19** de soufflage est donnée à un instant $t_{S1}$ dénommé « top départ soufflage ». L'électrovanne **19** de soufflage étant affectée d'un temps de réponse $\Delta t_S$, la pression P régnant dans le récipient **2** subit une inflexion (croissance subite) à partir d'un instant $t_{S2}$ dénommé « départ réel soufflage » tel que $t_{S2} = t_{S1} + \Delta t_S$, qui marque le début réel de la phase de soufflage. L'instant $t_{S2}$ est détecté sur la courbe de pression par l'unité **4** de contrôle. A cet effet, et selon un mode particulier de réalisation, la fonction P(t) est obtenue par interpolation à partir des mesures de pression. Comme la pression P croît linéairement à la fin du présoufflage, la dérivée de P(t) y est constante, de sorte que l'unité **4** de contrôle peut affecter à l'instant $t_{S2}$ la valeur de l'instant où la dérivée de P(t) change de valeur. En variante, la fonction P(t) est dérivée deux fois, et l'unité **4** de contrôle affecte à l'instant $t_{S2}$ la valeur de l'instant où la dérivée double de P(t) cesse d'être nulle. Ces deux techniques fournissent le même résultat. L'instant $t_{S2}$ est mémorisé par l'unité **4** de contrôle.

Enfin, la commande d'ouverture du distributeur **33** primaire (c'est-à-dire la mise en communication de l'orifice **36** primaire du vérin **23** avec la source **34** primaire) et, simultanément, de fermeture du distributeur **38** secondaire (c'est-à-dire la mise en communication de l'orifice **41** secondaire avec l'évacuation **40**) est donnée à un instant $t_{B1}$ dénommé « top départ boxage ». En supposant identiques les distributeurs **33, 38,** on note $\Delta t_B$ le temps de réponse cumulé de chaque distributeur **33** ou **38** et du vérin **23**, le déplacement du piston **27** (et donc du fond **9** de moule) démarrant à un instant dénommé « départ réel boxage » $t_{B2}$ tel que $t_{B2} = t_{B1} + \Delta t_B$, qui marque le début réel de déplacement du fond **9** de moule. L'instant $t_{B2}$ est détecté sur la courbe de boxage par l'unité **4** de contrôle. A cet effet, l'unité **4** de contrôle affecte à l'instant $t_{B2}$ la valeur de l'instant à partir duquel la fonction H(t) (qui peut être calculée par interpolation polynomiale à partir des mesures de position) change de valeur, ou à partir duquel la dérivée de H(t) cesse d'être nulle. L'instant $t_{B2}$ est mémorisé par l'unité **4** de contrôle.

On note par ailleurs $t_{S3}$ l'instant où la pression dans le récipient **2** cesse de croître car ayant atteint son maximum (c'est-à-dire la pression de soufflage), auquel la pression P demeure sensiblement égale pendant une durée prédéterminée appelée palier de soufflage, ou période de stabilisation. L'instant $t_{S3}$ est détecté sur la courbe de pression par l'unité **4** de contrôle. A cet effet, l'unité **4** de contrôle détecte par exemple pendant la phase de soufflage l'annulation de la dérivée de la fonction P(t) ou l'instant auquel la pression dans le récipient **2** atteint la pression de soufflage, éventuellement corrigée d'une valeur prédéterminée correspondant aux pertes de charges qui peuvent affecter l'unité **1** de formage, et qui correspond au début du palier de soufflage. L'instant $t_{S3}$ est mémorisé par l'unité **4** de contrôle.

On note ensuite $t_{B3}$ l'instant où le fond **9** de moule atteint sa position haute, ayant parcouru toute sa course C. L'instant $t_{B3}$, qui marque la fin du boxage, est avantageusement postérieur à l'instant $t_{S3}$, c'est-à-dire que le boxage doit s'achever après le début du palier de soufflage (en d'autres termes après la fin de la montée en pression du récipient **2** due au soufflage). L'instant $t_{B3}$ est détecté sur la courbe de boxage par l'unité **4** de contrôle. A cet effet, l'unité **4** de contrôle affecte à l'instant $t_{B3}$ la valeur de l'instant où la dérivée de la fonction H(t) s'annule. L'instant $t_{B3}$ est mémorisé par l'unité **4** de contrôle.

Comme nous l'avons déjà indiqué, et comme cela est visible sur la figure 4, le boxage est initié avant le soufflage : $t_{B2} < t_{S2}$. Les temps de réponse $\Delta t_S$ et $\Delta t_B$ affectant respectivement l'électrovanne **19** de soufflage et les distributeurs **33, 38** sont programmés dans l'unité **4** de contrôle, qui en tient compte pour que la commande d'ouverture de l'électrovanne **19** et des distributeurs **33, 38** permette d'initier le boxage avant le soufflage.

Il a cependant été constaté que la seule inégalité $t_{B2} < t_{S2}$ n'est pas suffisante pour garantir une bonne qualité de récipient (en particulier s'agissant des performances mécaniques du fond du récipient **2**). En effet, il faut que l'intervalle T1 entre l'instant $t_{B2}$ de départ réel boxage et l'instant $t_{S2}$ de départ réel soufflage (T1 = $t_{S2}$ - $t_{B2}$) soit sensiblement constant au cours des cycles, et égal à une valeur de référence non nulle prédéterminée, notée $T1_{ref}$. Le terme « égal » ne signifie pas que T1 et $T1_{ref}$ sont strictement égaux, mais que l'écart entre eux est imperceptible, c'est-à-dire inférieur à quelques pourcent, typiquement 5%. En d'autres termes, T1 et $T1_{ref}$ sont décrétés égaux si :

$0.95 \cdot T1_{ref} \leq T1 \leq 1.05 \cdot T1_{ref}$

Dans ce qui suit, pour simplifier, on convient que :

- T1 = $T1_{ref}$ signifie que $0.95 \cdot T1_{ref} \leq T1 \leq 1.05 \cdot T1_{ref}$ ;
- T1 > $T1_{ref}$ signifie que $T1 > 1.05 \cdot T1_{ref}$ ;
- T1 < $T1_{ref}$ signifie que $T1 < 0.95 \cdot T1_{ref}$ ;
- T1 ≠ $T1_{ref}$ signifie que $T1 > T1_{ref}$ ou $T1 < T1_{ref}$.

Les temps de réponse $\Delta t_P$, $\Delta t_S$ et $\Delta t_B$ peuvent connaître des dérives, qui résultent d'une usure par frottement et par fatigue mécanique des pièces mobiles des électrovannes **16, 19** et des distributeurs **33, 38.** On peut imaginer reprogrammer régulièrement le temps de réponse des électrovannes **16, 19** et des distributeurs **33, 38** mais un arrêt complet de la machine est nécessaire pour effectuer les mesures, ce qui grève la production.

C'est pourquoi il est préférable de surveiller - et corriger si nécessaire - les dérives constatées de T1 par rapport à $T1_{ref}$.

Pour chaque unité **1** de formage, l'unité **4** de contrôle calcule l'intervalle T1 à partir des valeurs mémorisées de $t_{B2}$ et $t_{S2}$ : T1 = $t_{S2}$ - $t_{B2}$ et compare T1 à la valeur de référence $T1_{ref}$. Ce calcul et cette comparaison peuvent être effectués à chaque cycle (et plus précisément à l'issue de chaque cycle, c'est-à-dire entre l'évacuation d'un récipient **2** formé et le chargement d'une nouvelle ébauche **3**), ou périodiquement (par exemple tous les cinq à dix cycles). Lorsque le calcul est effectué périodiquement, la comparaison avec la valeur $T1_{ref}$ de référence peut être réalisée sur la base d'une moyenne de valeurs de T1 mesurées au cours de plusieurs cycles successifs.

Tant que $T1 \neq T1_{ref}$, alors l'unité de contrôle **4** décale le top départ boxage $t_{B1}$ pour le cycle suivant, de sorte à recaler T1 sur $T1_{ref}$.

Ce recalage est effectué en décalant le top départ boxage $t_{B1}$, sur commande de l'unité **4** de contrôle agissant sur le seul distributeur **33**. On suppose en effet que le décalage du top départ soufflage $t_{S1}$ est réalisé séparément par l'unité **4** de contrôle en fonction d'autres paramètres (notamment le positionnement correct d'un pic de pression lors de la phase de présoufflage).

Pour mieux expliquer la correction appliquée par l'unité **4** de contrôle, on indexe les cycles de formage en affectant à un cycle donné l'indice entier N, et au cycle suivant l'indice N+1, à la manière des suites mathématiques.

Lorsque, pour le cycle N (ou pour un nombre prédéterminé de cycles N-P à N, où P est un indice entier positif inférieur à N), $T1(N) \neq T1_{ref}$, l'unité **4** de contrôle effectue pour le cycle suivant N+1 le décalage du top départ boxage $t_{B1}(N+1)$ en appliquant la règle suivante :

- si $T1(N) = T1_{ref}$ alors $t_{B1}(N+1) = t_{B1}(N)$, ce qui maintient le top départ boxage (et donc toute la phase de boxage),
- si $T1(N) > T1_{ref}$ alors $t_{B1}(N+1) = t_{B1}(N) - (T1(N) - T1_{ref})$, ce qui avance le top départ boxage (et donc toute la phase de boxage),
- si $T1(N) < T1_{ref}$ alors $t_{B1}(N+1) = t_{B1}(N) + (T1(N) - T1_{ref})$, ce qui retarde le top départ boxage (et donc toute la phase de boxage).

(Dans ce qui précède, T1(N) désigne la valeur de T1 au cycle N ou la moyenne de T1 sur les cycles N-P à N.)

Une telle correction cyclique limite le risque de dérive de T1 qui, maintenu sensiblement constant au cours des cycles, favorise l'uniformité et la qualité des récipients produits.

On note par ailleurs T2 la durée totale du boxage, c'est-à-dire l'intervalle séparant l'instant $t_{B2}$ de départ réel boxage et l'instant $t_{B3}$ de fin du boxage : $T2 = t_{B3} - t_{B2}$.

Il a en effet été constaté que la qualité des récipients dépend également de l'intervalle T2, qui doit avantageusement être maintenu sensiblement égal à une valeur $T2_{ref}$ de référence prédéterminée. C'est pourquoi il est préférable de surveiller - et corriger si nécessaire - les dérives constatées de T2 par rapport à $T2_{ref}$.

Comme précédemment, le terme « égal » ne signifie pas que T2 et $T2_{ref}$ sont strictement égaux, mais que l'écart entre eux est imperceptible, c'est-à-dire inférieur à quelques pourcent, typiquement 5%. En d'autres termes, T2 et $T2_{ref}$ sont décrétés égaux si :

$$0.95 \cdot T2_{ref} \leq T2 \leq 1.05 \cdot T2_{ref}$$

Dans ce qui suit, pour simplifier, on convient que :

- T2 = T2ref signifie que $0.95 \cdot T2_{ref} \leq T2 \leq 1.05 \cdot T2_{ref}$ ;
- T2 > T2ref signifie que $T2 > 1.05 \cdot T2_{ref}$ ;
- T2 < T2ref signifie que $T2 < 0.95 \cdot T2_{ref}$ ;
- $T2 \neq T2ref$ signifie que T2 > T2ref ou $T2 < T2_{ref}$.

L'intervalle T2 est fonction de la course C de boxage et de la vitesse de boxage, c'est-à-dire de la vitesse de déplacement du fond **9** de moule (et donc du piston **27**).

En production, la course C du fond **9** de moule est fixe, car déterminée par le choix du vérin **23** et par son réglage éventuel, qui n'est réalisé que périodiquement pendant les phases de maintenance de l'unité **1** de formage.

Comme cela est visible sur la figure 4, la vitesse de boxage n'est pas constante au cours du boxage. En effet, les efforts s'opposant à la remontée du fond **9** de moule croissent avec la montée de la pression dans l'ébauche **3** dès que celle-ci atteint la surface **10** du fond **9** de moule.

Toute variation affectant la courbe de soufflage modifie par conséquent la vitesse de déplacement du fond **9** de moule, et donc la valeur de l'intervalle T2.

Mais la vitesse de déplacement du fond **9** de moule peut être modifiée d'un cycle N (ou des cycles N-P à N) au cycle N+1 suivant, par action sur le variateur **37** de pression et/ou sur le variateur **42** de débit.

Pour chaque unité **1** de formage, l'unité **4** de contrôle calcule l'intervalle T2 à partir des valeurs mémorisées de $t_{B2}$ et $t_{B3}$ : $T2 = t_{B3} - t_{B2}$ et compare T2 à la valeur de référence $T2_{ref}$. Comme T1, T2 peut être corrigé à chaque cycle ou périodiquement. Dans ce dernier cas, la comparaison avec la valeur $T2_{ref}$ de référence peut se baser sur une moyenne des valeurs de T2 mesurées au cours de plusieurs cycles successifs.

Tant que $T2 \neq T2_{ref}$, alors l'unité **4** de contrôle modifie la pression de fluide au niveau du variateur **37** de pression et/ou le débit de fluide au niveau du variateur **42** de débit, de sorte à recaler T2 sur $T2_{ref}$.

Plus précisément, lorsque, pour le cycle N (ou pour les cycles N-P à N), $T2(N) \neq T2_{ref}$, l'unité **4** de contrôle effectue pour le cycle suivant N+1 la modification de la pression au niveau du variateur **37** de pression et le débit au niveau du variateur **37** en appliquant la règle suivante :

- si $T2(N) = T2_{ref}$ alors le débit est maintenu,
- si $T2(N) > T2_{ref}$ alors le débit est accru pour augmenter la vitesse de boxage et ainsi avancer l'instant $t_{B3}$,
- si $T2(N) < T2_{ref}$ alors le débit est réduit pour diminuer la vitesse de boxage et ainsi retarder l'instant $t_{B3}$.

(Dans ce qui précède, T2(N) désigne la valeur de T2 au cycle N ou la moyenne de T2 sur les cycles N-P à N.)

Une telle correction cyclique limite le risque de dérive de T2, dont la régulation favorise l'uniformité et la qualité des récipients produits.

En alternative à la régulation de l'intervalle T2, il peut être procédé, pour les mêmes raisons et de la même manière, à la régulation d'un intervalle T3 séparant l'instant $t_{S3}$ auquel la pression dans le récipient **2** atteint la valeur de la pression de soufflage et l'instant $t_{B3}$ de fin de boxage : T3 = $t_{B3}$ - $t_{S3}$.

Dans ce cas, c'est l'intervalle T3 qu'il est avantageux de maintenir, d'un cycle N (ou des cycles N-P à N) au cycle N+1 suivant, égal à une valeur $T3_{ref}$ de référence prédéterminée. Il est alors préférable de surveiller à chaque cycle - et corriger si nécessaire - les dérives constatées de T3 par rapport à $T3_{ref}$.

Comme précédemment, le terme « égal » ne signifie pas que T3 et $T3_{ref}$ sont strictement égaux, mais que l'écart entre eux est imperceptible, c'est-à-dire inférieur à quelques pourcent, typiquement 5%. En d'autres termes, T3 et $T3_{ref}$ sont décrétés égaux si :
$0.95 \cdot T3ref \leq T3 \leq 1.05 \cdot T3_{ref}$

Dans ce qui suit, pour simplifier, on convient que :

- T3 = $T3_{ref}$ signifie que $0.95 \cdot T3_{ref} \leq T3 \leq 1.05 \cdot T3_{ref}$ ;
- T3 > $T3_{ref}$ signifie que $T3 > 1.05 \cdot T3_{ref}$ ;
- T3 < T3ref signifie que $T3 < 0.95 \cdot T3_{ref}$ ;
- T3 ≠ $T3_{ref}$ signifie que T3 > $T3_{ref}$ ou T3 < $T3_{ref}$.

Comme T2, T3 est fonction de la course C de boxage (fixe en production) et de la vitesse de boxage, qui peut être modifiée d'un cycle N (ou des cycles N-P à N) au cycle N+1 suivant, par action sur le variateur **37** de pression et/ou sur le variateur **42** de débit. Mais T3 est également fonction de la pression de soufflage, qui détermine $t_{S3}$.

Pour chaque unité 1 de formage, l'unité **4** de contrôle calcule l'intervalle T3 à partir des valeurs mémorisées de $t_{S3}$ et $t_{B3}$ : T3 = $t_{B3}$ - $t_{S3}$ et compare T3 à la valeur de référence $T3_{ref}$. Comme T1 ou T2, T3 peut être corrigé à chaque cycle ou périodiquement. Dans ce dernier cas, la comparaison avec la valeur $T3_{ref}$ de référence peut se baser sur une moyenne des valeurs de T3 mesurées au cours de plusieurs cycles successifs.

Tant que T3 ≠ $T3_{ref}$, alors l'unité **4** de contrôle modifie la pression au niveau du variateur **37** et/ou le débit de fluide au niveau du variateur **42,** de sorte à recaler T3 sur $T3_{ref}$.

Plus précisément, lorsque, pour le cycle N (ou pour la moyenne des cycles N-P à N), T3(N) ≠ $T3_{ref}$, l'unité **4** de contrôle effectue pour le cycle suivant N+1 la modification de la pression au niveau du variateur **37** et/ou du débit au niveau du variateur **42** en appliquant la règle suivante :

- si T3(N) = $T3_{ref}$ alors le débit est maintenu,

- si T3(N) > $T3_{ref}$ alors le débit est augmenté pour augmenter la vitesse de boxage et ainsi avancer l'instant $t_{B3}$,
- si T3(N) < $T3_{ref}$ alors le débit est restreint pour diminuer la vitesse de boxage et ainsi retarder l'instant $t_{B3}$.

(Dans ce qui précède, T3(N) désigne la valeur de T3 au cycle N ou la moyenne de T3 sur les cycles N-P à N.)

Une telle correction cyclique limite le risque de dérive de T3, dont la régulation favorise, comme T2, l'uniformité et la qualité des récipients produits.

Il a par ailleurs été constaté que diverses autres mesures, considérées séparément ou en combinaison, peuvent permettre d'améliorer l'uniformité et la qualité des récipients.

Premièrement, il est possible de détecter une défaillance du distributeur **33** primaire et/ou du vérin **23** grâce à la valeur du temps de réponse $\Delta t_B$. Plus précisément, comme nous l'avons vu, le temps $\Delta t_B$ de réponse est un délai composite égal à la somme du temps de réponse, noté $\Delta t_{BD}$, du distributeur **33** et celui, noté $\Delta t_{BV}$, du vérin **23** :

$$\Delta t_B = \Delta t_{BD} + \Delta t_{BV}$$

A l'aide d'un capteur de pression monté dans la chambre **29** primaire et relié à l'unité **4** de contrôle qui en recueille les données, il est possible de mesurer la pression dans la chambre **29** primaire, et par conséquent d'en déduire une valeur du temps de réponse $\Delta t_{BD}$, égal au délai séparant le top départ boxage $t_{B1}$ de l'instant où la pression commence à augmenter dans cette chambre **29.**

L'unité **4** de contrôle peut être programmée pour comparer $\Delta t_{BD}$ à une valeur seuil prédéterminée (correspondant à un fonctionnement nominal du distributeur **33** primaire) et, lorsque $\Delta t_{BD}$ est décrété supérieur ou égal à cette valeur seuil, pour en conclure à une défaillance du distributeur **33** primaire et générer une alerte signalant cette défaillance et recommandant par exemple un arrêt de l'unité 1 de formage en vue de remplacer le distributeur **33** primaire ou effectuer sur celui-ci des opérations de contrôle manuel et/ou des réparations.

De même, à l'aide d'un capteur de mouvement couplé au fond **9** de moule ou à la tige **28** (qui sont solidaires) et relié à l'unité **4** de contrôle qui en recueille les données, et en combinaison avec le capteur de pression monté dans la chambre **29** primaire, il est possible de détecter le mouvement du fond **9** de moule et par conséquent d'en déduire une valeur du temps de réponse $\Delta t_{BV}$, égal au délai séparant la montée en pression dans la chambre **29** primaire et l'instant où commence à se déplacer la tige **28** (et donc le fond **9** de moule).

L'unité **4** de contrôle peut être programmée pour comparer $\Delta t_{BV}$ à une valeur seuil prédéterminée (correspondant à un fonctionnement normal du vérin **23**)

et, lorsque $\Delta t_{BV}$ est décrété supérieur ou égal à cette valeur seuil, pour en conclure à une défaillance du vérin **23** et générer une alerte signalant cette défaillance et recommandant par exemple un arrêt de l'unité **1** de formage en vue de remplacer le vérin **23** ou effectuer sur celui-ci des opérations de contrôle manuel et/ou des réparations.

Une défaillance du vérin **23** peut également être détectée à partir de la courbe de position du fond **9** de moule (en haut sur la figure 4) et de la courbe de soufflage (en bas sur la figure 4). Plus précisément, il est possible de vérifier la cohérence entre la position, notée $H_{S2}$, du fond **9** de moule à l'instant $t_{S2}$ de début réel du soufflage et la durée **T2** du boxage. Cette cohérence peut être vérifiée par l'unité **4** de contrôle, qui peut à cet effet être programmée pour vérifier conjointement que la position $H_{S2}$ est comprise entre deux valeurs prédéterminées et que la durée T2 est également comprise entre deux valeurs prédéterminées et, si ces deux conditions cumulatives (correspondant à un bon fonctionnement du vérin **23**) ne sont pas vérifiées, pour générer une alerte signalant une défaillance du vérin **23** et recommandant par exemple un arrêt de l'unité 1 de formage en vue de remplacer ou effectuer des opérations de contrôle

Deuxièmement, il est possible de réguler la valeur de $H_{S2}$ (définie ci-dessus) au moyen du variateur **42** de débit, piloté par l'unité **4** de contrôle.

Au point de coordonnées ($t_{S2}$, $H_{S2}$), la courbe de boxage (en haut sur la figure 4) subit une modification de sa pente, due à la croissance subite de la pression dans l'ébauche **3,** comme en témoigne la courbe de pression.

La position du fond **9** de moule à l'instant $t_{S2}$, c'est-à-dire la valeur de $H_{S2}$, doit être réglée de manière relativement précise car la qualité du récipient **2** en dépend. En effet, si le fond **9** de moule est positionné trop bas à l'instant $t_{S2}$, il peut se produire un pincement de la matière entre le fond **9** de moule et l'ouverture **8** lors du soufflage. A contrario, si le fond **9** de moule est positionné trop haut à l'instant $t_{S2}$, la matière de l'ébauche 3 peut ne pas correctement prendre l'empreinte de la surface **10** interne. La position du fond **9** de moule à l'instant $t_{S2}$ dépend de la vitesse de déplacement du fond **9** de moule et peut par conséquent être réglée au moyen du variateur **42** de débit.

Par conséquent, à partir des mesures récoltées au cycle N (ou éventuellement sur plusieurs cycles N-P à N), l'unité **4** de contrôle vérifie que $H_{S2}$ correspond à une valeur de référence prédéterminée et, si tel n'est pas le cas, pilote le variateur **42** de débit pour, à partir du cycle N+1 :

- diminuer le débit autorisé de sorte à ralentir le piston **27** si la valeur de $H_{S2}$ est supérieure (moyennant une tolérance) à la valeur de référence ;
- a contrario, augmenter le débit autorisé de sorte à accélérer le piston **27** si la valeur de $H_{S2}$ est inférieure (moyennant une tolérance) à la valeur de référence.

On notera enfin qu'il peut arriver, suite aux actions de l'unité **4** de contrôle évoquées ci-dessus, que le variateur **42** de débit soit réglé à son minimum (c'est-à-dire qu'il laisse complètement ouverte la section de passage du fluide, notamment pour augmenter la vitesse de déplacement du piston **27** à pression constante dans la chambre **29** primaire) ou au contraire à son maximum (c'est-à-dire qu'il obture au maximum la section de passage du fluide, notamment pour diminuer la vitesse de déplacement du piston **27** à pression constante dans la chambre **29** primaire). Dans ces deux cas, les marges de manoeuvre offertes à l'unité **4** de contrôle pour agir sur le déplacement du fond **9** de moule et, in fine, sur la courbe de boxage, sont réduites. Afin de permettre à l'unité **4** de contrôle de retrouver ces marges de manoeuvre, il peut être prévu de programmer l'unité **4** de contrôle pour agir sur le variateur **37** de pression de sorte à :

- diminuer la pression injectée dans la chambre **29** primaire lorsque le variateur **42** atteint son débit minimum ;
- augmenter au contraire la pression injectée dans la chambre **29** primaire lorsque le variateur atteint son débit maximum.

## Revendications

1. Procédé de fabrication d'un récipient (**2**) à partir d'une ébauche (**3**) en matière plastique, au sein d'un moule (**5**) muni d'une paroi (**6**) définissant une cavité (**7**) à l'empreinte du récipient (**2**), et d'un insert (**9**) mobile par rapport à la paroi (**6**) entre une position rétractée et une position déployée, ce procédé comprenant, après une opération d'introduction de l'ébauche (**3**) dans le moule :

   - une phase de présoufflage comprenant l'injection dans l'ébauche (**3**) d'un fluide à une pression de présoufflage ;
   - une phase de soufflage, consécutive à la phase de présoufflage et comprenant l'injection dans l'ébauche (**3**) d'un fluide à une pression de soufflage supérieure à la pression de présoufflage ;
   - une phase de boxage comprenant le déplacement de l'insert (**9**) de sa position rétractée vers sa position déployée ;

   ce procédé comprenant les opérations consistant à :

   - mesurer en temps réel la pression régnant dans l'ébauche (**3**) ;
   - mémoriser les valeurs de la pression mesurée et leurs instants respectifs de mesure ;
   - mesurer en temps réel la position de l'insert (**9**) ;

- mémoriser les valeurs de la position mesurée de l'insert (**9**) et leurs instants respectifs de mesure ;
- à partir des valeurs mémorisées de la pression dans l'ébauche (**3**), détecter et mémoriser un instant $t_{S2}$ marquant le début réel de la phase de soufflage ;
- à partir des valeurs de position mesurée de l'insert (**9**), détecter et mémoriser un instant $t_{B2}$ marquant le début réel du déplacement de l'insert (**9**) ;
- calculer l'intervalle, noté T1, séparant $t_{B2}$ de $t_{S2}$ ;

ce procédé étant **caractérisé en ce qu'**il comprend en outre les opérations consistant à :

- comparer l'intervalle T1 avec une valeur $T1_{ref}$ de référence prédéterminée non nulle,
- tant que l'intervalle T1 est décrété différent de la valeur $T1_{ref}$ de référence, décaler l'initiation de la phase de boxage.

2. Procédé selon la revendication 1, **caractérisé en ce qu'**il comprend l'opération consistant, tant que l'intervalle T1 est décrété inférieur à la valeur $T1_{ref}$ de référence, à avancer la phase de boxage.

3. Procédé selon la revendication 1 ou la revendication 2, **caractérisé en ce que**, l'insert (**9**) étant solidaire de la tige (**28**) d'un vérin (**23**) alimenté en fluide sous pression par l'intermédiaire d'un distributeur (**33**) à ouverture commandée, le décalage de l'initiation de la phase de boxage consiste à décaler la commande d'ouverture du distributeur (**33**).

4. Procédé selon l'une des revendications 1 à 3, qui comprend les opérations consistant à :

- à partir des valeurs de position mesurée de l'insert (**9**), détecter un instant $t_{B3}$ auquel l'insert (**9**) atteint sa position haute ;
- calculer l'intervalle, noté T2, séparant $t_{B3}$ de $t_{B2}$ ;
- comparer l'intervalle T2 avec une valeur $T2_{ref}$ de référence prédéterminée non nulle ;
- tant que l'intervalle T2 est décrété différent de la valeur $T2_{ref}$ de référence, modifier la vitesse de déplacement de l'insert (**9**) lors de la phase de boxage.

5. Procédé selon la revendication 4, **caractérisé en ce que**, l'insert (**9**) étant solidaire de la tige (**28**) d'un vérin (**23**) alimenté en fluide sous pression, ce procédé comprend les opérations consistant à :

- mesurer la position ($H_{S2}$) de l'insert (**9**) à instant $t_{S2}$ marquant le début réel de la phase de soufflage,
- vérifier si la position ($H_{S2}$) de l'insert (**9**) est comprise entre deux valeurs prédéterminées et si T2 est également compris entre deux valeurs prédéterminées,
- si ces deux conditions ne sont pas conjointement satisfaites, générer une alerte.

6. Procédé selon la revendication 5, **caractérisé en ce que**, le vérin (**23**) étant relié à une évacuation (**40**) par l'intermédiaire d'un variateur (**42**) de débit, il comprend, si la position ($H_{S2}$) de l'insert (**9**) n'est pas comprise entre deux valeurs prédéterminées ou si T2 n'est pas compris entre deux valeurs prédéterminées, une opération consistant à modifier le débit de fluide au niveau du variateur (**42**) de débit.

7. Procédé selon l'une des revendications 1 à 3, qui comprend les opérations consistant à :

- à partir des valeurs mémorisées de la pression dans l'ébauche (**3**), détecter et mémoriser un instant $t_{S3}$ auquel la pression dans l'ébauche (**3**) cesse de croître pendant la phase de soufflage ;
- à partir des valeurs de position mesurée de l'insert (**9**), détecter un instant $t_{B3}$ auquel l'insert (**9**) atteint sa position haute ;
- calculer l'intervalle, noté T3, séparant $t_{S3}$ de $t_{B3}$ ;
- comparer l'intervalle T3 avec une valeur $T3_{ref}$ de référence prédéterminée non nulle ;
- tant que l'intervalle T3 est décrété différent de la valeur $T3_{ref}$ de référence, modifier la vitesse de déplacement de l'insert (**9**) lors de la phase de boxage.

8. Procédé selon la revendication 7, **caractérisé en ce que**, l'insert (**9**) étant solidaire de la tige (**28**) d'un vérin (**23**) alimenté en fluide sous pression par l'intermédiaire d'un distributeur (**33**) à ouverture commandée et d'un variateur (**37**) de pression, la modification de la vitesse de déplacement de l'insert (**9**) consiste à agir sur le variateur (**37**) de pression pour modifier la pression du fluide alimentant le vérin (**23**).

9. Procédé selon l'une des revendications précédentes, **caractérisé en ce que**, l'insert (**9**) étant solidaire de la tige (**28**) d'un vérin (**23**) alimenté en fluide sous pression par l'intermédiaire d'un distributeur (**33**) à ouverture commandée, ce procédé comprend les opérations consistant à :

- mesurer un temps de réponse du vérin (**23**) et/ou un temps de réponse du distributeur (**33**) et,
- comparer ce temps de réponse à une valeur seuil prédéterminée,
- lorsque ce temps de réponse est supérieur à la valeur de référence, générer une alerte.

10. Procédé selon l'une des revendications précédentes, **caractérisé en ce que**, l'insert (**9**) étant solidaire de la tige (**28**) d'un vérin (**23**) alimenté en fluide sous pression par l'intermédiaire d'un distributeur (**33**) à ouverture commandée et d'un variateur (**37**) de pression, le vérin (**23**) étant en outre relié à une évacuation (**40**) par l'intermédiaire d'un variateur (**42**) de débit, ce procédé comprend les opérations consistant, si le débit au niveau du variateur (**42**) atteint un minimum, respectivement un maximum, à commander le variateur (**37**) de pression pour diminuer, respectivement augmenter, la pression injectée dans le vérin (**23**).

**Patentansprüche**

1. Verfahren zur Herstellung eines Behälters (2) eines Kunststoffvorformlings (3) in einem Formwerkzeug (5), das mit einer Wand (6), die einen Hohlraum (7) mit der Kontur des Behälters (2) definiert, und mit einer Einlage (9), die bezüglich der Wand (6) zwischen einer eingezogenen Position und einer ausgezogenen Position beweglich ist, versehen ist, wobei das Verfahren nach einem Schritt des Einlegens des Vorformlings (3) in das Formwerkzeug Folgendes umfasst:

   - einen Vorgang des Vorblasens, der das Einspritzen eines Fluids unter Vorblasdruck in den Vorformling (3) umfasst;
   - einen Vorgang des Blasens, der auf den Vorgang des Vorblasens folgt und das Einspritzen eines Fluids unter Blasdruck, der über dem Vorblasdruck liegt, in den Vorformling (3) umfasst;
   - einen Boxing-Vorgang, der das Verschieben der Einlage (9) aus ihrer eingezogenen Position in ihre ausgezogene Position umfasst;

   wobei das Verfahren die Schritte umfasst, die aus Folgendem bestehen:

   - Bestimmen des in dem Vorformling (3) herrschenden Drucks in Echtzeit;
   - Speichern der Werte des bestimmten Drucks und ihrer jeweiligen Bestimmungszeitpunkte;
   - Bestimmen der Position der Einlage (9) in Echtzeit;
   - Speichern der Werte der bestimmten Position der Einlage (9) und ihrer jeweiligen Bestimmungszeitpunkte;
   - ausgehend von den gespeicherten Werten des Drucks in dem Vorformling (3), Detektieren und Speichern eines Zeitpunkts $t_{S2}$, der den wahren Beginn des Blasvorgangs kennzeichnet;
   - ausgehend von den Werten der bestimmten Position der Einlage (9), Detektieren und Speichern eines Zeitpunkts $t_{B2}$, der den wahren Beginn der Verschiebung der Einlage (9) kennzeichnet;
   - Berechnen des als T1 bezeichneten Zeitabstands, der $t_{B2}$ und $t_{S2}$ voneinander trennt;

wobei das Verfahren **dadurch gekennzeichnet ist, dass** es des Weiteren die Schritte umfasst, die aus Folgendem bestehen:

   - Vergleichen des Zeitabstands T1 mit einem im Voraus festgelegten Bezugswert $T1_{ref}$, der nicht null beträgt,
   - wenn festgestellt wird, dass sich der Zeitabstand T1 von dem Bezugswert $T1_{ref}$ unterscheidet, Verschieben der Einleitung des Boxing-Vorgangs.

2. Verfahren nach Anspruch 1, **dadurch gekennzeichnet, dass** es den Schritt umfasst, der darin besteht, dass der Boxing-Vorgang vorverlegt wird, wenn festgestellt wird, dass der Zeitabstand T1 weniger als der Bezugswert $T1_{ref}$ beträgt.

3. Verfahren nach Anspruch 1 oder Anspruch 2, **dadurch gekennzeichnet, dass** die Einlage (9) mit der Stange (28) eines Zylinders (23), dem durch eine Verteilungsvorrichtung (33) mit Öffnungsansteuerung druckbeaufschlagtes Fluid zugeführt wird, fest verbunden ist, wobei das Verschieben der Einleitung des Boxing-Vorgangs aus dem Verschieben der Ansteuerung der Öffnung der Verteilungsvorrichtung (33) besteht.

4. Verfahren nach einem der Ansprüche 1-3, das die Schritte umfasst, die aus Folgendem bestehen:

   - ausgehend von den Werten der gemessenen Position der Einlage (9), Detektieren eines Zeitpunkts $t_{B3}$, zu dem die Einlage (9) ihre obere Position erreicht;
   - Berechnen des als T2 bezeichneten Zeitabstands, der $t_{B3}$ von $t_{B2}$ trennt;
   - Vergleichen des Zeitabstands T2 mit einem im Voraus festgelegten Bezugswert $T2_{ref}$, der nicht null beträgt,
   - wenn festgestellt wird, dass sich der Zeitabstand T2 von dem Bezugswert $T2_{ref}$ unterscheidet, Modifizieren der Verschiebungsgeschwindigkeit der Einlage (9) während des Boxing-Vorgangs.

5. Verfahren nach Anspruch 4, **dadurch gekennzeichnet, dass** die Einlage (9) mit der Stange (28) eines Zylinders (23), dem druckbeaufschlagtes Fluid zugeführt wird, fest verbunden ist, wobei das Verfahren die Schritte umfasst, die aus Folgendem bestehen:

- Bestimmen der Position ($H_{S2}$) der Einlage (9) zum Zeitpunkt $t_{S2}$, der den wahren Beginn des Blasvorgangs kennzeichnet,
- Überprüfen, dass die Position ($H_{S2}$) der Einlage (9) zwischen zwei im Voraus festgelegten Werten liegt und dass T2 auch zwischen zwei im Voraus festgelegten Werten liegt,
- wenn die beiden Bedingungen nicht zugleich erfüllt sind, Erzeugen einer Warnung.

6. Verfahren nach Anspruch 5, **dadurch gekennzeichnet, dass** es bei über einen Durchsatzregler (42) mit einem Auslass (40) verbundenem Zylinder (23) einen Schritt umfasst, der aus der Modifikation des Fluiddurchsatzes an dem Durchsatzregler (42), wenn die Position ($H_{S2}$) der Einlage (9) nicht zwischen zwei im Voraus festgelegten Werten liegt oder wenn T2 nicht zwischen zwei im Voraus festgelegten Werten liegt, besteht.

7. Verfahren nach einem der Ansprüche 1-3, das die Schritte umfasst, die aus Folgendem bestehen:

- ausgehend von den gespeicherten Werten des Drucks in dem Vorformling (3), Detektieren und Speichern eines Zeitpunkts $t_{S3}$, zu dem der Druck in dem Vorformling (3) während des Blasvorgangs aufhört anzusteigen;
- ausgehend von den Werten der bestimmten Position der Einlage (9), Detektieren eines Zeitpunkts $t_{B3}$, zu dem die Einlage (9) ihre obere Position erreicht;
- Berechnen des als T3 bezeichneten Zeitabstands, der $t_{S3}$ und $t_{B3}$ voneinander trennt;
- Vergleichen des Zeitabstands T3 mit einem im Voraus festgelegten Bezugswert $T3_{ref}$, der nicht null beträgt,
- wenn festgestellt wird, dass sich der Zeitabstand T3 von dem Bezugswert $T3_{ref}$ unterscheidet, Modifizieren der Verschiebungsgeschwindigkeit der Einlage (9) während des Boxing-Vorgangs.

8. Verfahren nach Anspruch 7, **dadurch gekennzeichnet, dass** die Einlage (9) mit der Stange (28) eines Zylinders (23), dem durch eine Verteilungsvorrichtung (33) mit Öffnungsansteuerung und einen Druckregler (37) druckbeaufschlagtes Fluid zugeführt wird, fest verbunden ist, wobei die Modifikation der Verschiebungsgeschwindigkeit der Einlage (9) aus Einwirken auf den Druckregler (37) zur Modifikation des Drucks des dem Zylinder (23) zugeführten Fluids besteht.

9. Verfahren nach einem der vorhergehenden Ansprüche, **dadurch gekennzeichnet, dass** die Einlage (9) mit der Stange (28) eines Zylinders (23), dem durch eine Verteilungsvorrichtung (33) mit Öffnungsansteuerung druckbeaufschlagtes Fluid zugeführt wird, fest verbunden ist, wobei das Verfahren die Schritte umfasst, die aus Folgendem bestehen:

- Bestimmen einer Reaktionszeit des Zylinders (23) und/oder einer Reaktionszeit der Verteilungsvorrichtung (33), und
- Vergleichen der Reaktionszeit mit einem im Voraus festgelegten Schwellenwert,
- wenn die Reaktionszeit über einem Bezugswert liegt, Erzeugen einer Warnung.

10. Verfahren nach einem der vorhergehenden Ansprüche, **dadurch gekennzeichnet, dass** bei mit der Stange (28) eines Zylinders (23), dem durch eine Verteilungsvorrichtung (33) mit Öffnungsansteuerung und einen Druckregler (37) druckbeaufschlagtes Fluid zugeführt wird, fest verbundener Einlage (9), wobei der Zylinder (23) des Weiteren über einen Durchsatzregler (42) mit einem Auslass (40) verbunden ist, das Verfahren die Schritte umfasst, die daraus bestehen, den Druckregler (37) dahingehend anzusteuern, den in den Zylinder (23) eingelassenen Druck zu reduzieren bzw. zu erhöhen, wenn der Durchsatz am Regler (42) einen Mindestwert bzw. einen Höchstwert erreicht.

## Claims

1. Method for manufacturing a container (2) from a preform (3) made of plastic material, in a mould (5) provided with a wall (6) defining a cavity (7) with the die of the container (2), and an insert (9) that is mobile relative to the wall (6) between a retracted position and a deployed position, this method comprising, after an operation of introduction of the preform (3) into the mould:

- a preblowing phase comprising the injection into the preform (3) of a fluid at a preblowing pressure;
- a blowing phase, following the preblowing phase and comprising the injection into the preform (3) of a fluid at a blowing pressure higher than the preblowing pressure;
- a boxing phase comprising the displacement of the insert (9) from its retracted position to its deployed position;

this method comprising the operations consisting in:

- measuring in real time the pressure prevailing in the preform (3);
- storing the measured pressure values and their respective instants of measurement;

- measuring in real time the position of the insert (9);
- storing the measured insert (9) position values and their respective instants of measurement;
- from the stored values of the pressure in the preform (3), detecting and storing an instant $t_{S2}$ marking the real start of the blowing phase;
- from the measured insert (9) position values, detecting and storing an instant $t_{B2}$ marking the real start of the displacement of the insert (9);
- computing the interval, denoted T1, separating $t_{B2}$ from $t_{S2}$;

this method being **characterized in that** it further comprises the operations consisting in:

- comparing the interval T1 with a non-zero predetermined reference value $T1_{ref}$,
- as long as the interval T1 is decreed to be different from the reference value $T1_{ref}$, postponing the initiation of the boxing phase.

2. Method according to Claim 1, **characterized in that** it comprises the operation consisting, as long as the interval T1 is decreed to be less than the reference value $T1_{ref}$, in advancing the boxing phase.

3. Method according to Claim 1 or Claim 2, **characterized in that**, the insert (9) being secured to the rod (28) of a cylinder (23) supplied with fluid under pressure via a distributor (33) with controlled opening, the postponing of the initiation of the boxing phase consists in postponing the command to open the distributor (33).

4. Method according to one of Claims 1 to 3, which comprises the operations consisting in:

- from the measured insert (9) position values, detecting an instant $t_{B3}$ at which the insert (9) reaches its high position;
- computing the interval, denoted T2, separating $t_{B3}$ from $t_{B2}$;
- comparing the interval T2 with a non-zero predetermined reference value $T2_{ref}$;
- as long as the interval T2 is decreed to be different from the reference value $T2_{ref}$, modifying the speed of displacement of the insert (9) in the boxing phase.

5. Method according to Claim 4, **characterized in that**, the insert (9) being secured to the rod (28) of a cylinder (23) supplied with fluid under pressure, this method comprises the operations consisting in:

- measuring the position ($H_{S2}$) of the insert (9) at the instant $t_{S2}$ marking the real start of the blowing phase,

- checking whether the position ($H_{S2}$) of the insert (9) lies between two predetermined values and whether T2 also lies between two predetermined values,
- if these two conditions are not both satisfied, generating an alert.

6. Method according to Claim 5, **characterized in that**, the cylinder (23) being linked to a discharge (40) via a flow rate regulator (42), it comprises, if the position ($H_{S2}$) of the insert (9) does not lie between two predetermined values or if T2 does not lie between two predetermined values, an operation consisting in modifying the fluid flow rate at the flow rate regulator (42).

7. Method according to one of Claims 1 to 3, which comprises the operations consisting in:

- from the stored values of the pressure in the preform (3), detecting and storing an instant $t_{S3}$ at which the pressure in the preform (3) ceases to increase during the blowing phase;
- from the measured insert (9) position values, detecting an instant $t_{B3}$ at which the insert (9) reaches its high position;
- computing the interval, denoted T3, separating $t_{S3}$ from $t_{B3}$;
- comparing the interval T3 with a non-zero predetermined reference value $T3_{ref}$;
- as long as the interval T3 is decreed to be different from the reference value $T3_{ref}$, modifying the speed of displacement of the insert (9) in the boxing phase.

8. Method according to Claim 7, **characterized in that**, the insert (9) being secured to the rod (28) of a cylinder (23) supplied with fluid under pressure via a distributor (33) with controlled opening and a pressure regulator (37), the modification of the speed of displacement of the insert (9) consists in acting on the pressure regulator (37) to modify the pressure of the fluid supplying the cylinder (23).

9. Method according to one of the preceding claims, **characterized in that**, the insert (9) being secured to the rod (28) of a cylinder (23) supplied with fluid under pressure via a distributor (33) with controlled opening, this method comprises the operations consisting in:

- measuring a response time of the cylinder (23) and/or a response time of the distributor (33) and,
- comparing this response time to a predetermined threshold value,
- when this response time is greater than the reference value, generating an alert.

10. Method according to one of the preceding claims, **characterized in that**, the insert (9) being secured to the rod (28) of a cylinder (23) supplied with fluid under pressure via a distributor (33) with controlled opening and a pressure regulator (37), the cylinder (23) being also linked to a discharge (40) via a flow rate regulator (42), this method comprises the operations consisting, if the flow rate at the regulator (42) reaches a minimum, respectively a maximum, in controlling the pressure regulator (37) to reduce, respectively increase, the pressure injected into the cylinder (23).

FIG.1

# FIG.2

FIG.3

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1922256 A
- US 2009139996 A
- EP 2173637 A

- EP 2709821 A
- FR 2998207
- WO 2014080109 A